# EUROPÄISCHE PATENTSCHRIFT

(11) **EP 4 126 291 B1**
(45) Veröffentlichungstag und Bekanntmachung des Hinweises auf die Patenterteilung: **21.02.2024**
(21) Anmeldenummer: 21716273.4
(22) Anmeldetag: 22.03.2021
(51) Int. Cl.: B01D 29/11, B01D 29/60, B01D 29/86, B01D 29/90, B01D 29/94

(54) **ANLAGE ZUR TRENNUNG SUSPENDIERTER STOFFE AUS EINER FLÜSSIGKEIT MIT EINER FILTERANORDNUNG NACH ART EINES ZYKLONFILTERS**
SYSTEM FOR SEPARATING SUSPENDED SUBSTANCES FROM A LIQUID USING A CYCLONE FILTER-TYPE FILTER ASSEMBLY
INSTALLATION DE SÉPARATION DE MATIÈRES EN SUSPENSION DANS UN LIQUIDE À L'AIDE D'UN ENSEMBLE FILTRANT DE TYPE CYCLOFILTRE

(30) Priorität: 23.03.2020 DE 102020203699
(43) Veröffentlichungstag der Anmeldung: 08.02.2023
(73) Patentinhaber: Klass, Georg Jun., 82299 Türkenfeld (DE)
(72) Erfinder: Klass, Georg Jun., 82299 Türkenfeld (DE)
(74) Vertreter: Rösler, Uwe
(86) Internationale Anmeldenummer: PCT/EP2021/057250
(87) Internationale Veröffentlichungsnummer: WO 2021/191137

(56) Entgegenhaltungen:
- EP-A1- 0 950 754
- GB-A- 1 236 685
- US-A- 3 053 391

## Beschreibung

### Technisches Gebiet

Die Erfindung bezieht sich auf eine Anlage zur Trennung suspendierter Stoffe aus einer Flüssigkeit mit einer Filteranordnung nach Art eines Zyklonfilters mit einem um eine Längsachse rotationssymmetrischen Filtergehäuse, das ein zentrisch zur Längsachse angeordnetes sowie hohlzylinderförmig ausgebildetes, einen inneren, zylinderförmigen Filtratraum umschließendes Filterelement radial umfasst und mit diesem einen im Querschnitt ringförmigen Strömungskanal begrenzt, der einen Drallraum, in den außermittig und quer zur Längsachse ein Strömungszulauf mündet, sowie einen sich längs der Längsachse mittel- oder unmittelbar stromab zum Drallraum, anschließenden Separationskanal aufweist, sowie mit einer Strömungsleitflächenanordnung, die wenigstens ein sich parallel zur Längsachse erstreckendes, radial zum Filterelement beabstandetes und innerhalb des Strömungskanals angeordnetes Strömungsleitflächenelement aufweist, das um die Längsachse drehbar gelagert und mittels eines Drehmotors antreibbar ist, wobei der Filtratraum mit einer ersten und der Separationskanal mit einer zweiten Ableitung verbunden sind.

### Stand der Technik

Gattungsgemäße Filteranordnungen, die nach Art eines Fliehkraftabscheiders ausgebildet sind und häufig auch als Zyklonfilter bezeichnet werden, nutzen die separierende Wirkung der Zentrifugalkraft, die auf innerhalb einer gasförmigen oder flüssigen Drallströmung enthaltenen Teilchen fester Stoffe wirkt. Zur Erzeugung der Drallströmung dient ein rotationssymmetrisch ausgebildetes Filtergehäuse, das im Wesentlichen rohrförmig ausgebildet ist und seitlich außermittig, zu dessen Längsachse einen Strömungszulauf vorsieht, durch den das zu filtrierende Medium unter Ausbildung einer um die Längsachse orientierten Drallströmung eingespeist wird. Mittig zur Längsachse ist innerhalb des Filtergehäuses ein rohrförmiges Filterelement angebracht, das zumeist mit einer unterdruckbeaufschlagten Strömungsableitung fluidisch verbunden ist. Die Zentrifugalkraft getriebene Entmischung von innerhalb des gasförmigen oder flüssigen Mediums enthaltenen Teilchen fester Stoffe führt zu einer Ansammlung der Teilchen im Bereich der das Filterelement radial umgebenden Filtergehäusewand längs der die Teilchen strömungsdynamisch gesammelt und nötigenfalls entsorgt werden. Hingegen sind die Strömungsbereiche der Drallströmung, die die Filterwand des mittig angeordneten rohrförmigen Filterelementes unmittelbar umströmen, weitgehend aufgereinigt und enthalten allenfalls leichtgewichtige Teilchen fester Stoffe, die es gilt an einem Durchtritt durch die Filterwand in das Innere des Filterelementes zu hindern. Hierzu ist die Filterkorngröße der Filterwand in geeigneter Weise gewählt, so dass einerseits eine gewünschte Filterwirkung und andererseits ein ausreichender Strömungsdurchtritt durch die Filterwand in das Innere des Filterelementes zur Erzeugung eines gereinigten, d.h. gefilterten Massenstroms, erzielt werden.

Die Druckschrift EP 2 049 222 B1 offenbart eine gattungsgemäße Filtervorrichtung zur Abscheidung von Verunreinigungen aus einem Fluidstrom mittels Einsatz eines Filterelementes, das in einem Filtergehäuse aufgenommen ist, wobei das Filtergehäuse einen Drallraum derart besitzt, so dass der zu filtrierende Fluidstrom zumindest teilweise in einer Drallströmung um das Filterelement herumgeführt wird. In den in Form einer konischen Erweiterung des Filtergehäuses ausgebildeten Drallraum mündet außermittig zur Längsachse ein Zulauf, durch den das zu filtrierende Medium zugeführt wird. Das sich längs des Filtergehäuses erstreckende Filterelement verjüngt sich konisch mit zunehmendem Abstand zum Drallraum und ist im Bereich des Drallraumes fluiddicht mit einem Ablauf für das filtrierte Medium aus dem Inneren des Filterelementes verbunden.

Die Betriebsweise an sich bekannter Fliehkraftabscheider sieht eine druckbeaufschlagte, in den Drallraum des Filtergehäuses einmündende zu filtrierende Fluidströmung vor, die unter Ausbildung einer Drallströmung das länglich rohrförmig ausgebildete Filterelemente helikal überströmt und druckbeaufschlagt radial von außen durch die Filterwand in das Innere des Filterelementes unter Abreinigung von Teilchen fester Stoffe hindurchtritt. Der gereinigte Filtratstrom gelangt so druckgetrieben aus dem Inneren des Filterelementes über den Ablauf nach außen.

Die Druckschrift US 2005/00400091 A1 beschreibt eine Filteranordnung nach Art eines Zyklonfilters, dessen Filterelement ringspaltförmige Filterdurchlässe innerhalb des ansonsten hohlzylinderartig ausgebildeten Filterelementes aufweist. Zur Reinigung des Filterelementes dient eine Rückspülung durch die Filteranordnung, durch die der Filterbetrieb unterbrochen werden muß.

Die Druckschrift US 2014/0034568 A1 offenbart eine Zahnradpumpe, eine sogenannte Trochoidpumpe, die mit einem hohlzylinderförmigen Filterelement kombiniert ist, das mit einer umlaufenden Schaufelanordnung kombiniert ist, um das Filterelement vor Zusetzen des Filters zu bewahren.

Systembedingte, in und auf der Wandung des Filterelementes anhaftende Filterrückstände führen zur Verschlechterung der Filterwirkung und machen Filterreinigungsmaßnahmen häufig erforderlich. Beispielsweise eignen sich hierzu Rückspülungen der Filteranordnung mit einem Medium.

Aus Gründen einer robusten und dauerhaften Betriebsweise derartiger Zyklonfilter weisen die in derartigen Anordnungen verbauten Filterelemente Filterlochgrößen mit einem Mindestlochdurchmesser von 100 µm auf.

Die Druckschrift EP 0 950 754 A1 offenbart eine Anlage zur Trennung suspendierter Stoffe aus einer Flüssigkeit mit einem zylindrischen Filter, einem zylindrischen Filtergehäuse sowie einem tangentialen Einlass, der zu einer Drallströmung im Ringraum um das Filterelement führt. In diesem Ringspalt rotiert motorisch angetrieben und von der Filteroberfläche beabstandet ein Strömungsleitflächenelement.

Die Druckschriften GB 1 236 685 A und US 3 053 391 A offenbaren ähnliche Filter, die sich gegenüber der vorstehenden Anlage zur Trennung suspendierter Stoffe keine weiterführenden Merkmale offenbaren.

### Darstellung der Erfindung

Der Erfindung liegt die Aufgabe zugrunde eine Anlage zur Trennung suspendierter Stoffe aus einer Flüssigkeit mit einer Filteranordnung nach Art eines Zyklonfilters mit einem um eine Längsachse rotationssymmetrischen Filtergehäuse, das ein zentrisch zur Längsachse angeordnetes sowie hohlzylinderförmig ausgebildetes, einen inneren, zylinderförmigen Filtratraum umschließendes Filterelement radial umfasst und mit diesem einen im Querschnitt ringförmigen Strömungskanal begrenzt, der einen Drallraum, in den außermittig und quer zur Längsachse ein Strömungszulauf mündet, sowie einen sich längs der Längsachse mittel- oder unmittelbar stromab zum Drallraum, anschließenden Separationskanal aufweist, sowie mit einer Strömungsleitflächenanordnung, die wenigstens ein sich parallel zur Längsachse erstreckendes, radial zum Filterelement beabstandetes und innerhalb des Strömungskanals angeordnetes Strömungsleitflächenelement aufweist, das um die Längsachse drehbar gelagert und mittels eines Drehmotors antreibbar ist, wobei der Filtratraum mit einer ersten Ableitung und der Separationskanal mit einer zweiten Ableitung verbunden sind, derart weiterzubilden, so dass eine Aufreinigung von mit Feststoffpartikeln versetzte Flüssigkeit möglich wird, deren Partikeldimensionen kleiner 100 µm betragen. Der Betrieb einer derartigen Anlage soll unverändert robust und unterbrechungsfrei realisierbar sein, wie dies bei bekannten Anlagen zur Aufreinigung von Schmutzwasser mit makroskopischen Feststoffanteilen der Fall ist.

Die Lösung der der Erfindung zugrundeliegenden Aufgabe ist im Anspruch 1 angegeben. Ein Verfahren zum Betrieb der Anlage ist Gegenstand des Anspruches 13. Den Erfindungsgedanken in vorteilhafter Weise weiterbildende Merkmale sind Gegenstand der Unteransprüche sowie der weiteren Beschreibung unter Bezugnahme auf die Ausführungsbeispiele zu entnehmen.

Eine lösungsgemäße Anlage zur Trennung suspendierter Stoffe aus einer Flüssigkeit mit einer Filteranordnung nach Art eines Zyklonfilters mit den Merkmalen des Oberbegriffes des Anspruches 1 zeichnet sich dadurch aus, dass das Filterelement eine Filterwand besitzt, die in Form eines einlagig perforierten Bleches ausgebildet ist, dessen Perforationslöcher an der radial äusseren Filterwandoberfläche einen größten Lochdurchmesser im Bereich von 5 µm bis 80 µm einschließlich besitzen, dass Mittel zur Messung eines Differenzdruckes zwischen dem Filtratraum und dem Separationskanal vorgesehen sind, dass längs der ersten und zweiten Ableitung jeweils ein Absperrventil eingebracht ist, und dass eine Steuereinheit vorgesehen ist, die in Abhängigkeit des Differenzdruckes den Drehmotor und/oder wenigstens eines der Absperrventile betätigt.

Die lösungsgemäße Anlage vermag Feststoffpartikel mit Partikelgrößen deutlich unter 100 µm aus flüssigen Medien, vorzugsweise in Form von Schmutzwasser, zu separieren. Das hierzu im Zyklonfilter angeordnete Filterelement weist eine geradzylinderförmige Filterwand mit einer radial nach aussen sowie einer radial nach innen orientierten Filterwandoberfläche auf, die von einer Vielzahl von Perforationslöchern vollständig durchsetzt ist. Im Falle von die Filterwand zylinderförmig durchsetzenden Perforationslöchern liegen die größten Lochdurchmesser im Bereich von 5 µm bis 80 µm einschließlich. Im Falle von die Filterwand durchsetzenden Perforationslöchern mit einer sich konisch erweiternden Lochgeometrie sind die Perforationslöcher mit ihrem jeweils kleinsten Lochdurchmesser, der gleichfalls im Bereich von 5 µm bis 80 µm liegt, an der radial nach aussen orientierten Filterwandoberfläche angeordnet.

Alternativ oder in Kombination können die Perforationslöcher an der radial äusseren Filterwandoberfläche einen spaltförmigen Lochdurchmesser besitzen, jeweils mit einer Spaltlänge l und einer Spaltbreite b, für die gilt: 5 µm ≤ l, b ≤ 80 µm.

Derartig kleine Lochdurchmesser würden das Filterelement bei konventionellen und bisher in Betrieb befindlichen Zyklonfiltern schnell zusetzen, d.h. es kommt zu oberflächigen Anhaftungen von Feststoffpartikeln an der radial nach außen orientierten Filterwandoberfläche im Bereich der Lochöffnungen, was zumindest zu einer signifikanten Beeinträchtigung der Filterwirkung bis hin zum Totalausfall des Zyklonfilters führt. Zeit- und arbeitsaufwändige Filterreinigungsmaßnahmen wären infolgedessen unvermeidbar.

Um die vorstehend erläuterte Filterverstopfung zu vermeiden sieht der Zyklonfilter in der lösungsgemäßen Anlage wenigstens ein sich oberflächennah über die radial nach außen orientierte Filterwandoberfläche bewegendes Strömungsleitflächenelement vor, das drehbar um die Längsachse des zylinderförmigen Filterelementes angeordnetes ist und eine Länge aufweist, die wenigstens der Dimension der Längserstreckung des Filterelements entspricht. Durch die Drehdynamik des vorzugsweise Flügelprofilartig ausgebildeten Strömungsleitflächenelementes bildet sich im Drehspalt, der vorzugsweise eine konstante Spaltweite im Bereich von 1 und 10 mm aufweist, zwischen der äußeren Filterelementwand und dem Strömungsleitflächenelement ein Unterdruck nach den Gesetzmäßigkeiten von Bernoulli aus, durch dessen Sogwirkung mögliche an der äußeren Filterelementwand anhaftende Feststoffpartikel regelrecht von der Filterwand weggerissen werden.

Vorsorge ist zudem dafür zu treffen, dass der Zyklonfilter stets vollständig mit Flüssigkeit befüllt ist, d.h. der Drallraum und der Separationskanal sind mit der aufzureinigenden und mit Feststoffpartikeln versetzten Flüssigkeit sowie der Filtratraum mit der von Feststoffpartikeln zumindest weitgehend befreiten Flüssigkeit, der sogenannten Sauberflüssigkeit, gefüllt, um den vorstehend erläuterten, auf einer dynamische Sogwirkung basierenden Reinigungseffekt nutzen zu können. Um dies mit möglichst einfachen Mitteln gewährleisten zu können bietet es sich an, eine mit dem Separationskanal verbundene Ableitung, im weiteren als erste Ableitung bezeichnet, längs der die sogenannte Schmutzflüssigkeit abgeführt wird, sowie auch eine mit dem Filtratraum verbundene zweite Ableitung, über die die Sauberflüssigkeit abgeführt wird, jeweils vertikal über das Füllniveau des Zyklonfilters verlaufend anzuordnen.

Alternativ oder in Kombination mit der vorstehend erwähnten Anordnungsweise ist eine Überwachungseinheit vorgesehen, die eine Befüllung des Zyklonfilters mit Flüssigkeit sensorisch erfasst, bei der zumindest das Filterelement vollständig von Flüssigkeit umgeben ist.

Im Rahmen einer Vielzahl vorgenommener Versuche kristallisierte sich die Erkenntnis heraus, dass für einen erfolgreichen Betrieb des Zyklonfilters mit einem Filterelement, das über Perforationslöcher mit den vorstehend angegebenen Lochdimensionen verfügt, für einen Differenzdruck zwischen dem niedrigeren Filtratraumdruck und dem höheren Separationskanaldruck gesorgt werden muss, der 200 mbar, vorzugsweise 100 mbar nicht überschreiten sollte, zumal ansonsten der Sogwirkungsbedingte Reinigungseffekt zum Erliegen kommt. Bei einem höheren Differenzdruck überwiegen die ebenfalls Druck-bedingten Anhaftungskräfte, mit denen die Feststoffe an der radial äußeren Filterelementwand anhaften und dabei die Perforationslöcher zusetzen, gegenüber den auf dem sich ausbildenden hydrodynamisch Sog basierten Reinigungskräften. Aus diesem Grund sieht die lösungsgemäße Anlage Mittel zur Messung des Differenzdruckes zwischen dem Filtratraum und dem Separationskanal sowie eine Steuereinheit vor, die in Abhängigkeit des Differenzdruckes den Drehmotor und/oder und/oder wenigstens eines der Absperrventile betätigt. Die vorzugweise als Drosselventile ausgebildeten Absperrventile können stufenlos gedrosselt werden, so dass eine feindosierte Einstellung der Druckdifferenz auf diese Weise möglich wird. Neben einer Aktivierung des Drehmotors, im Sinne einer bloßen Ein- und Ausschaltung des Drehmotors vermag die Steuereinheit in einer bevorzugten Ausführungsform auch die Drehzahl des Drehmotors und somit die dadurch bedingte Sogwirkung zwischen dem wenigstens einen Flügelprofilartig ausgebildeten Strömungsleitflächenelement und der Filterelementaußenwandoberfläche zu beeinflussen.

Der Drehmotor, der im Betrieb der Anlage einen durchaus relevanten Kostenfaktor darstellt, kann auf diese Weise in einem Regelbetrieb in Abhängigkeit des Verschmutzungsrades der aufzureinigenden und mit Feststoffpartikeln versetzen Flüssigkeit betrieben werden. Auf diese Weise können die energetischen Betriebskosten der Anlage reduziert und individuell auf den tatsächlichen Reinigungsbedarf angepasst werden.

Die Mittel zur Differenzdruckmessung weisen vorzugsweise jeweils einen Drucksensor in der ersten und zweiten Ableitung auf, längs denen zudem jeweils ein Absperrventil, vorzugsweise in Form eines kontinuierlich, vollständig schließbaren Drosselventils, angeordnet sind. Auf diese Weise kann automatisch oder manuell Einfluss auf die durch die jeweiligen Ableitungen abgeführten Schmutz- bzw. Sauberflüssigkeitsmengen genommen werden.

Vorzugsweise wird der Zyklonfilter mit einer längs des in den Drallraum mündenden Strömungszulaufes angeordneten Druckquelle druckbeaufschlagt mit der von den suspendierten Stoffen zu trennenden Flüssigkeit derart beschickt, so dass sich innerhalb des Separationskanals eine um die Längsachse orientierte Helikalströmung mit einer durch den Drallraum vorgegebenen Strömungsrichtung und einer durch die Druckquelle bestimmte Strömungsgeschwindigkeit ausbildet. Vorzugsweise lässt sich die Druckquelle ebenfalls mit Hilfe der Steuereinheit ansteuern oder regeln.

Das Filterelement stellt strömungstechnisch ein Drosselelement dar, durch das sich ohne weitere Maßnahme bei einer vorgegebenen Druck-beaufschlagten Befüllung des Zyklonfilters eine Druckdifferenz zwischen dem Separationskanal und dem Filtratraum ausbildet. Mit Hilfe der in der ersten und zweiten Ableitung angeordneten Absperrventile bzw. Drosselventile kann direkten Einfluss auf die Druckdifferenz zwischen dem Filtratraum und Separationskanal genommen werden.

Alternativ oder in Kombination mit der Betätigung der Absperrventile bzw. Drosselventile sieht eine weitere bevorzugte Ausführungsform der Anlage jeweils eine Sogeinheit in der ersten und/oder zweiten Ableitung vor, durch die die abführende Fördermenge bezüglich des Schmutz- und/oder Sauberflüssigkeit getrennt voneinander oder in Kombination eingestellt werden können.

Zur Beeinflussung der Druckdifferenz zwischen dem Separationskanal und dem Filtratraum sieht eine weitere bevorzugte Ausführungsform der Anlage vor, dass die Steuereinheit wenigstens eine der nachfolgenden Komponenten, wie vorstehend beschrieben, zu beeinflussen vermag: Drehmotor, Druckquelle längs des Strömungszulaufes, Absperrventil bzw. Drosselventil längs der ersten und zweiten Ableitung sowie Sogeinheit längs der ersten und zweiten Ableitung.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnung exemplarisch beschrieben. Es zeigt:

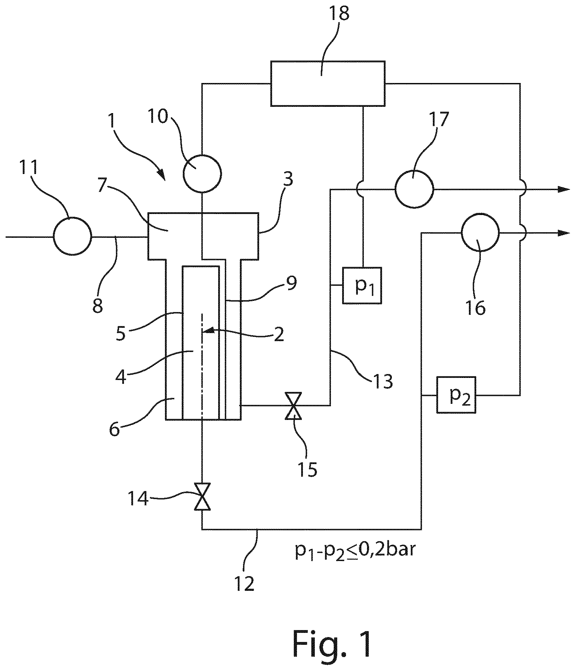

- Fig. 1: Schematisierter Anlage mit Zyklonfilter

### Wege zur Ausführung der Erfindung, gewerbliche Verwendbarkeit

Figur 1 zeigt eine Anlage zur Trennung suspendierter Stoffe aus einer Flüssigkeit mit einer Filteranordnung 1 nach Art eines Zyklonfilters mit einem um eine Längsachse 2 rotationssymmetrischen Filtergehäuse 3, das ein zentrisch zur Längsachse 2 angeordnetes sowie hohlzylinderförmig ausgebildetes, einen inneren, zylinderförmigen Filtratraum 4 umschließendes Filterelement 5 radial umfasst und mit diesem einen im Querschnitt ringförmigen Strömungskanal begrenzt, der einen Drallraum 7, in den außermittig und quer zur Längsachse 2 ein Strömungszulauf 8 mündet, sowie einen sich längs der Längsachse 2 mittel- oder unmittelbar stromab zum Drallraum 7, anschließenden Separationskanal 6 aufweist, sowie mit einer Strömungsleitflächenanordnung, die wenigstens ein sich parallel zur Längsachse 2 erstreckendes, radial zum Filterelement 5 beabstandetes und innerhalb des Separationskanals 6 angeordnetes Strömungsleitflächenelement 9 aufweist, das um die Längsachse 2 drehbar gelagert und mittels eines Drehmotors 10 antreibbar ist.

Das Filterelement 5 besitzt eine Filterwand, die in Form eines einlagig perforierten Bleches ausgebildet ist, dessen Perforationslöcher an der radial äusseren Filterwandoberfläche einen größten Lochdurchmesser im Bereich von 5 µm bis 80 µm einschließlich besitzen.

Stromauf zum Strömungszulauf 8 ist eine Druckquelle 11 angeordnet, durch die die von den suspendierten Stoffen zu trennende Flüssigkeit druckbeaufschlagt in den Drallraum 7 des Zyklonfilters 1 gelangt, so dass sich innerhalb des Separationskanals 6 eine um die Längsachse 2 orientierte Helikalströmung mit einer durch den Drallraum 7 vorgegebenen Strömungsrichtung und einer durch die Druckquelle 7 bestimmte Strömungsgeschwindigkeit ausbildet.

Der Separationskanal 6 ist mit der ersten Ableitung 13 und der Filtratraum 4 mit der zweiten Ableitung 12 fluidisch verbunden. Längs der der ersten und zweiten Ableitung 13, 12 sind jeweils wenigstens ein Drucksensor p1, p2 sowie wenigstens ein Absperrventil bzw. Drosselventil 14, 15 angeordnet. Zudem sind längs der ersten Ableitung 13 eine erste Sogeinheit 17 und längs der zweiten Ableitung 12 eine zweite Sogeinheit 16 angeordnet.

Mit Hilfe der Drucksensoren p1 , p2 ist der Differenzdruck zwischen dem Filtratraum 4 und dem Separationskanal 6 messbar. Beide Drucksensoren p1, p2 sind mit einer Steuereinheit 18 verbunden, die in Abhängigkeit des Differenzdruckes Δp = p1-p2 den Drehmotor 10 aktiviert und/oder dessen Drehzahl beeinflusst und/oder die Drosselventile 14, 15 und/oder die Druckquelle und/oder die erste/zweite Sogeinheit 16, 17 ansteuert. Die Ansteuerung wenigstens einer der vorstehenden Komponenten erfolgt unter der Maßgabe die Differenzdruck Δp kleiner als 0,2 bar, vorzugsweise kleiner 100 mbar zu halten.

Die in Figur 1 dargestellte Anlage lässt insbesondere deren Betrieb in Abhängigkeit vom Verschmutzungsgrad der mit Feststoffpartikeln verschmutzen Flüssigkeit zu. Handelt es sich beispielsweise um nur leicht verschmutze Flüssigkeiten, so kann das Absperrventil/Drosselventil 15 geschlossen und der Drehmotor 15 ausgeschaltet sein. Nimmt der Druck längs der ersten Ableitung 13 ab, so ist dies ein Zeichen für ein beginnendes Zusetzen bzw. Verstopfen des Filterelementes 5. Als Folge hiervon kann der Drehmotor 10 aktiviert und/oder das Absperrventil 15 geöffnet werden.

### Bezugszeichenliste

- 1: Zyklonfilter
- 2: Längsachse
- 3: Filtergehäuse
- 4: Filtratraum
- 5: Filterelement
- 6: Separationskanal
- 7: Drallraum
- 8: Strömungszuleitung
- 9: Strömungsleitflächenelement
- 10: Drehmotor
- 11: Druckquelle
- 12: Erste Ableitung
- 13: Zweite Ableitung
- 14: Erstes Absperrventil/Drosselventil
- 15: Zweites Absperrventil/Drosselventil
- 16: Erste Sogeinheit
- 17: Zweite Sogeinheit
- 18: Steuereinheit
- p1: Drucksensor
- p2: Drucksensor

## Patentansprüche

1. Anlage zur Trennung suspendierter Stoffe aus einer Flüssigkeit mit einer Filteranordnung nach Art eines Zyklonfilters (1) mit einem um eine Längsachse (2) rotationssymmetrischen Filtergehäuse (3), das ein zentrisch zur Längsachse (2) angeordnetes sowie hohlzylinderförmig ausgebildetes, einen inneren, zylinderförmigen Filtratraum (4) umschließendes Filterelement (5) radial umfasst und mit diesem einen im Querschnitt ringförmigen Strömungskanal begrenzt, der einen Drallraum (7), in den außermittig und quer zur Längsachse (2) ein Strömungszulauf (8) mündet, sowie einen sich längs der Längsachse (2) mittel- oder unmittelbar stromab zum Drallraum (7), anschließenden Separationskanal (6) aufweist, sowie mit einer Strömungsleitflächenanordnung, die wenigstens ein sich parallel zur Längsachse (2) erstreckendes, radial zum Filterelement (5) beabstandetes und innerhalb des Separationskanals (6) angeordnetes Strömungsleitflächenelement (9) aufweist, das um die Längsachse (2) drehbar gelagert und mittels eines Drehmotors (10) antreibbar ist, wobei der Filtratraum (4) mit einer ersten (12) und der Separationskanal (6) mit einer zweiten Ableitung (13) verbunden sind,
**dadurch gekennzeichnet, dass** das Filterelement (5) eine Filterwand besitzt, die in Form eines einlagig perforierten Bleches ausgebildet ist, dessen Perforationslöcher an der radial äusseren Filterwandoberfläche einen größten Lochdurchmesser im Bereich von 5 µm bis 80 µm einschließlich besitzen,
dass Mittel zur Messung eines Differenzdruckes zwischen dem Filtratraum (4) und dem Separationskanal (6) vorgesehen sind,
dass längs der ersten und zweiten Ableitung (12, 13) jeweils ein Absperrventil (14, 15) eingebracht ist,
und
dass eine Steuereinheit (18) vorgesehen ist, die in Abhängigkeit des Differenzdruckes den Drehmotor (10) und/oder wenigstens eines der Absperrventile (14, 15) betätigt.

2. Anlage nach Anspruch 1,
**dadurch gekennzeichnet, dass** die Perforationslöcher jeweils einen durchgängig konstanten Lochdurchmesser aufweisen.

3. Anlage nach Anspruch 1,
**dadurch gekennzeichnet, dass** die Perforationslöcher jeweils einen geringsten Lochdurchmesser an der radial äusseren Filterwandoberfläche aufweisen, der sich in Richtung der radial inneren Filterwandoberfläche konisch aufweitet.

4. Anlage nach einem der Ansprüche 1 bis 3,
**dadurch gekennzeichnet, dass** eine Überwachungseinheit vorgesehen ist, die eine Befüllung des Zyklonfilters (1) mit Flüssigkeit erfasst, bei der zumindest das Filterelement (5) vollständig von Flüssigkeit umgeben ist.

5. Anlage nach einem der Ansprüche 1 bis 4,
**dadurch gekennzeichnet, dass** die Strömungsleitflächenelemente (9) jeweils einen Spalt mit der Filterwandoberfläche einschließen, der ein Spaltmaß im Bereich von 1 mm bis 10 mm besitzt.

6. Anlage nach einem der Ansprüche 1 bis 5,
**dadurch gekennzeichnet, dass** das wenigstens eine Strömungsleitflächenelement (9) derart angeordnet und ausgebildet ist, dass im Zustand der Drehung des Strömungsleitflächenelementes (9) innerhalb des vollständig mit Flüssigkeit umgebenden Filterelementes (5) ein sich zwischen dem Strömungsleitflächenelement (9) und der radial äusseren Filterwandoberfläche lokal wirkender hydrodynamisch bedingter Sog ausbildet.

7. Anlage nach einem der Ansprüche 1 bis 6,
**dadurch gekennzeichnet, dass** stromauf zum Strömungszulauf (8) eine Druckquelle (11) angeordnet ist, durch die die von den suspendierten Stoffen zu trennende Flüssigkeit druckbeaufschlagt in den Drallraum (7) gelangt, so dass sich innerhalb des Separationskanals (6) eine um die Längsachse (2) orientierte Helikalströmung mit einer durch den Drallraum (7) vorgegebenen Strömungsrichtung und einer durch die Druckquelle (11) bestimmte Strömungsgeschwindigkeit ausbildet.

8. Anlage nach einem der Ansprüche 1 bis 7,
**dadurch gekennzeichnet, dass** längs der ersten Ableitung (12) eine erste Sogeinheit (16) angeordnet ist, und/oder, dass längs der zweiten Ableitung (13) eine zweite Sogeinheit (17) angeordnet ist.

9. Anlage nach einem der Ansprüche 1 bis 8,
**dadurch gekennzeichnet, dass** das Mittel zur Erfassung des Differenzdruckes jeweils längs der ersten und zweiten Ableitung (15) wenigstens einen Drucksensor (p1, p2) vorsieht.

10. Anlage nach einem der Ansprüche 1 bis 9,
**dadurch gekennzeichnet, dass** die Absperrventile (14, 15) in Form von Drosselventilen ausgebildet sind.

11. Anlage nach einem der Ansprüche 1 bis 10,
**dadurch gekennzeichnet, dass** die Perforationslöcher an der radial äusseren Filterwandoberfläche einen spaltförmigen Lochdurchmesser besitzen mit einer Spaltlänge l und einer Spaltbreite b, für die gilt: 5 µm ≤ l, b ≤ 80 µm.

12. Anlage nach einem der Ansprüche 1 bis 11,
**dadurch gekennzeichnet, dass** die erste und zweite Ableitung (12, 13) jeweils vertikal über ein dem Zyklonfilter (1) zuordenbaren Füllniveau verlaufend angeordnet sind.

13. Verfahren zum Betrieb einer Anlage nach einem der Ansprüche 1 bis 12, **dadurch gekennzeichnet, dass** die Steuereinheit (18) durch Aktivieren oder Betätigen wenigstens einer der nachfolgenden Komponenten den Differenzdruck zwischen dem Separationskanal (6) und dem Filtratraum (4) auf kleiner gleich 200 mbar aufrecht erhält:
Drehmotor (10), Absperrventil (14, 15) längs der ersten und/oder zweiten Ableitung (12, 13).

## Claims

1. A system for separating suspended substances from a liquid, with a filter assembly of the cyclone filter type (1) with a filter housing (3) which is rotationally symmetrical about a longitudinal axis (2), which comprises a filter element (5) disposed centrally to the longitudinal axis (2) and which is also in the form of a hollow cylinder and radially surrounds an inner cylindrical filtrate chamber (4) and with it delimits a flow channel which is annular in cross section, which has a swirl chamber (7) into which a flow feed line opens eccentrically and transversely to the longitudinal axis (2), as well as having a separating channel (6) which is connected along the longitudinal axis (2) indirectly or directly downstream of the swirl chamber (7), as well as with a flow guide surface assembly which has at least one flow guide surface element (9) which extends parallel to the longitudinal axis (2) and is disposed radially separated from the filter element (5) and inside the separating channel (6), and which is rotatably mounted about the longitudinal axis (2) and can be driven by means of a rotary motor (10), wherein the filtrate chamber (4) is connected to a first discharge line (12) and the separating channel (6) is connected to a second discharge line (13), **characterized in that** the filter element (5) has a filter wall which is configured in the form of a single-layered perforated sheet the perforation holes of which have a largest hole diameter in the range from 5 µm to 80 µm inclusive at the radially outer filter wall surface,
**in that** means for measuring a pressure difference between the filtrate chamber (4) and the separating channel (6) are provided,
**in that** a respective shut-off valve (14, 15) is introduced along the first and the second discharge line (12, 13), and
**in that** a control unit (18) is provided which actuates the rotary motor (10) and/or at least one of the shut-off valves (14, 15)as a function of the pressure difference.

2. The system as claimed in claim 1,
**characterized in that** the respective perforation holes have a consistently constant hole diameter.

3. The system as claimed in claim 1,
**characterized in that** the respective perforation holes have a smallest hole diameter at the radially outer filter wall surface which broadens conically in the direction of the radially inner filter wall surface.

4. The system as claimed in one of claims 1 to 3,
**characterized in that** a monitoring unit is provided which detects filling of the cyclone filter (1) with liquid using sensors, in which at least the filter element (5) is completely surrounded by liquid.

5. The system as claimed in one of claims 1 to 4,
**characterized in that** the flow guide surface elements (9) respectively encompass a gap with the filter wall surface which has a gap dimension in the range from 1 mm to 10 mm.

6. The system as claimed in one of claims 1 to 5,
**characterized in that** the at least one flow guide surface element (9) is disposed and configured in a manner such that in the state of rotation of the flow guide surface element (9) inside the filter element (5) which is completely surrounded by liquid, a hydrodynamic suction which acts locally is generated between the flow guide surface element (9) and the radially outer filter wall surface.

7. The system as claimed in one of claims 1 to 6,
**characterized in that** a pressure source (11) is disposed upstream of the flow feed line (8), by means of which the liquid to be separated from the suspended substances enters the swirl chamber (7) under pressure, so that inside the separating channel (6), a helical flow orientated around the longitudinal axis (2) is formed with a flow direction which is prescribed by the swirl chamber (7) and a flow rate which is determined by the pressure source (11).

8. The system as claimed in one of claims 1 to 7,
**characterized in that** a first suction unit (16) is disposed along the first discharge line (12) and/or **in that** a second suction unit (17) is disposed along the second discharge line (13).

9. The system as claimed in one of claims 1 to 8,
**characterized in that** the means for detecting the pressure difference includes at least one pressure sensor (p1, p2) respectively along the first and the second discharge line (12, 13).

10. The system as claimed in one of claims 1 to 9,
**characterized in that** the shut-off valves (14, 15) are in the form of throttle valves.

11. The system as claimed in one of claims 1 to 10,
**characterized in that** the perforation holes have a slit-shaped hole diameter at the radially outer filter wall surface with a slit length I and a slit width b, for which the following holds: 5 µm ≤ l, b ≤ 80 µm.

12. The system as claimed in one of claims 1 to 11,
**characterized in that** the first and second discharge lines (12, 13) are respectively disposed vertically above a fill level which can be attributed to the cyclone filter (1).

13. A method for operating a system as claimed in one of claims 1 to 12, **characterized in that** the control unit (18) maintains the pressure difference between the separating channel (6) and the filtrate chamber (4) at less than or equal to 200 mbar by activation or actuation of at least one of the following components: rotary motor (10), shut-off valve (14, 15) along the first and/or second discharge line (12, 13).

## Revendications

1. Installation, destinée à séparer des matières en suspension dans un liquide à l'aide d'un ensemble filtrant de type filtre cyclone (1), pourvu d'un boîtier de filtre (3) symétrique en rotation autour d'un axe longitudinal (2), qui comprend en direction radiale un élément filtrant (5) placé de manière centrée par rapport à l'axe longitudinal (2) et conçu en forme de cylindre creux, entourant une chambre (4) pour produits filtrés intérieure, de forme cylindrique et qui délimité avec celui-ci un canal d'écoulement à section transversale de forme annulaire, qui comporte une chambre de tourbillonnement (7), dans laquelle une admission (8) d'écoulement débouche de manière excentrée et à la transversale de l'axe longitudinal (2), ainsi qu'un canal de séparation (6) se raccordant le long de l'axe longitudinal (2) indirectement ou directement vers la chambre de tourbillonnement (7), et pourvu d'un ensemble de surfaces de guidage de l'écoulement, qui comporte au moins un élément (9) de surface de guidage de l'écoulement, s'étendant à la parallèle de l'axe longitudinal (2), écarté en direction radiale de l'élément filtrant (5) et placé à l'intérieur du canal de séparation (6) qui est logé en étant rotatif autour de l'axe longitudinal (2) et qui est susceptible d'être entraîné par un moteur rotatif (10), la chambre (4) pour produits filtrés étant reliée avec une première (12) et le canal de séparation (6) avec une deuxième évacuation (13), **caractérisée en ce que** l'élément filtrant (5) détient une paroi filtrante qui est conçue sous la forme d'une tôle perforée monocouche, dont les trous de perforation ont sur la surface de paroi filtrante extérieure en direction radiale un diamètre de trous le plus grand de l'ordre de 5 µm à 80 µm inclus,
**en ce que** des moyens sont prévus pour mesurer une pression différentielle entre la chambre (4) pour produits filtrés et le canal de séparation (6),
**en ce que** le long de la première et de la deuxième évacuations (12, 13) est ménagée chaque fois une vanne d'arrêt (14, 15),
et
**en ce qu'**il est prévu une unité de commande (18), qui en fonction de la pression différentielle, actionne le moteur rotatif (10) et / ou au moins l'une des vannes d'arrêt (14, 15).

2. Installation selon la revendication 1,
**caractérisée en ce que** les trous de perforation présentent chacun un diamètre de trou constant sur leur pénétration.

3. Installation selon la revendication 1,
**caractérisée en ce que** les trous de perforation présentent chacun un diamètre de trou le plus faible sur la surface de paroi filtrante extérieure en direction radiale qui s'élargit dans la direction de la surface de paroi filtrante intérieure en direction radiale.

4. Installation selon l'une quelconque des revendications 1 à 3,
**caractérisée en ce qu'**il est prévu une unité de supervision qui détecte un remplissage du filtre cyclone (1) avec du liquide, lors duquel au moins l'élément filtrant (5) est entièrement entouré de liquide.

5. Installation selon l'une quelconque des revendications 1 à 4,
**caractérisée en ce que** les éléments (9) de surface de guidage de l'écoulement incluent chacun avec la surface de paroi filtrante une fente, qui a une dimension de fente de l'ordre de 1 mm à 10 mm.

6. Installation selon l'une quelconque des revendications 1 à 5,
**caractérisée en ce que** l'au moins un élément (9) de surface de guidage de l'écoulement est placé et conçu de telle sorte que dans l'état de la rotation de l'élément (9) de surface de guidage de l'écoulement à l'intérieur de l'élément filtrant (5) entièrement entouré de liquide, il se constitue une aspiration à action locale, conditionnée par hydrodynamique entre l'élément (9) de surface de guidage de l'écoulement et la surface de paroi filtrante extérieure en direction radiale.

7. Installation selon l'une quelconque des revendications 1 à 6,
**caractérisée en ce qu'**en amont de l'admission (8) d'écoulement est placée une source de pression (11), par laquelle le liquide qui doit être séparé des matières en suspension soumis à une pression arrive dans la chambre de tourbillonnement (7), de telle sorte qu'à l'intérieur du canal de séparation (6), il se constitue un écoulement hélicoïdal orienté autour de l'axe longitudinal (2) avec une direction d'écoulement prédéfinie par la chambre de tourbillonnement (7) et une vitesse d'écoulement déterminée par la source de pression (11).

8. Installation selon l'une quelconque des revendications 1 à 7,
**caractérisée en ce que** le long de la première évacuation (12) est placée une première unité d'aspiration (16) et / ou **en ce que** le long de la deuxième évacuation (17) est placée une deuxième unité d'aspiration (817).

9. Installation selon l'une quelconque des revendications 1 à 8,
**caractérisée en ce que** le moyen de détection de la pression différentielle prévoit chaque fois le long de la première et de la deuxième évacuation (15) au moins un capteur de pression (p1, p2).

10. Installation selon l'une quelconque des revendications 1 à 9,
**caractérisée en ce que** les vannes d'arrêts (14, 15) sont conçues sous la forme de vannes d'étranglement.

11. Installation selon l'une quelconque des revendications 1 à 10,
**caractérisée en ce que** les trous de perforation sur la surface de paroi filtrante extérieure en direction radiale ont un diamètre de trou en forme de fente, avec une longueur de fente 1 et une largeur de fente b, pour lesquelles s'applique : 5 µm ≤ l, b ≤ 80 pm.

12. Installation selon l'une quelconque des revendications 1 à 11,
**caractérisée en ce que** la première et la deuxième évacuations (14, 15) sont placées en s'écoulant chacune au-delà d'un niveau de remplissage susceptible d'être attribué au filtre cyclone (1).

13. Procédé opérationnel d'une installation selon l'une quelconque des revendications 1 à 12, **caractérisé en ce que** l'unité de commande maintient la pression différentielle entre le canal de séparation (6) et la chambre (4) pour produits filtrés à un niveau inférieur ou égal à 200 mbar par activation ou actionnement d'au moins l'un des composants suivants : moteur rotatif (10), vanne d'arrêt (14, 15) le long de la première et / ou de la deuxième évacuation (12, 13) .
